# EUROPÄISCHE PATENTANMELDUNG

(11) **EP 3 340 444 A2**
(43) Veröffentlichungstag der Anmeldung: **27.06.2018**
(21) Anmeldenummer: 17204612.0
(22) Anmeldetag: 30.11.2017
(51) Int. Cl.: H02K 11/40, H02K 5/22, H02K 5/06

(54) **ELEKTROMOTOR UND KÜHLERLÜFTERMODUL MIT EINEM SOLCHEN ELEKTROMOTOR**

(30) Priorität: 30.11.2016 DE 102016223844
(71) Anmelder: Brose Fahrzeugteile GmbH & Co. Kommanditgesellschaft, Würzburg, 97076 Würzburg (DE)
(72) Erfinder: Schoele, Rainer, 97274 Leinach (DE); Pfister, Martin, 97353 Wiesentheid (DE); Rohm, Franziska, 97070 Würzburg (DE); Ludwig, Kevin, 97078 Würzburg (DE); Winheim, Georg, 97737 Gemünden am Main (DE)
(74) Vertreter: Isarpatent

(57) **Zusammenfassung**

Die vorliegende Erfindung betrifft einen Elektromotor (2), insbesondere für ein Kühlerlüftermodul eines Kraftfahrzeugs, aufweisend: einen Stator (1), welcher aus geschichteten Metallblechen (4) aufgebaut ist, einen Motorträger (6) aus einem elektrisch leitfähigen Material, eine Kabelanbindung (20) mit einem Masseleitungskabel (22), und wenigstens ein Verbindungs- und Kontaktierungselement (3) aus einem elektrisch leitfähigen Material, wobei das Verbindungs- und Kontaktierungselement (3) derart ausgebildet und an dem Elektromotor (2) angeordnet ist, dass es eine Masseanbindung zwischen dem Stator (1) und dem Motorträger (6) und/oder zwischen dem Stator (1) und dem Masseleitungskabel (22) der Kabelanbindung (20) bereitstellt und wobei der Stator (1) und der Motorträger (6) unabhängig von dem Verbindungs- und Kontaktierungselement (3) aneinander befestigt sind.

## Beschreibung

### GEBIET DER ERFINDUNG

Die vorliegende Erfindung betrifft einen Elektromotor und ein Kühlerlüftermodul mit einem derartigen Elektromotor, insbesondere ein Kühlerlüftermodul eines Kraftfahrzeugs.

### TECHNISCHER HINTERGRUND

Bisher erfolgt bei einem Elektromotor eine Ableitung über eine Masseanbindung dessen gewickelten Stators zu seinem Motorträger durch Schrauben, um den Elektromotor mit der erforderlichen elektromagnetischen Verträglichkeit (EMV) bereitzustellen.

Aus der DE 10 2012 222683 A1 ist des Weiteren ein Elektromotor mit einem Gehäuse bekannt, das durch einen Deckel verschlossen ist und einen zwischen Gehäuse und Deckel gehaltenes Steckerteil zur elektrische Kontaktierung des Elektromotors aufweist. Das Gehäuse ist dabei aus Stahl, das Steckerteil aus Kunststoff und der Deckel aus einem elektrisch leitfähigen Material gefertigt. Dabei sind mehrere Stahlfederklammern über den Umfang des Elektromotors verteilt angeordnet, die jeweils den Deckel und das Gehäuse vorgespannt hintergreifen, um Deckel, Gehäuse und Steckerteil aneinander zu befestigen. Durch die Stahlfederklammern und die elektrisch leitfähige Ausbildung des Deckels wir eine elektrisch leitfähige Verbindung von dem Deckel zu dem Gehäuse hergestellt, die insbesondere als Masseanschluss beziehungsweise Masseverbindung für an dem Deckel vorgesehene elektrische/elektronische Bauteile genutzt werden kann.

Dadurch, dass die Stahlfederklammer der Befestigung von Gehäuse und Deckel dienen benötigen sie zusätzlichen Bauraum. Des Weiteren müssen ausreichend Stahlfederklammern vorgesehen werden, um das Gehäuse und den Deckel ausreichend aneinander zu befestigen.

### ZUSAMMENFASSUNG DER ERFINDUNG

Vor diesem Hintergrund ist es eine Aufgabe der vorliegenden Erfindung, einen verbesserten Elektromotor, insbesondere einen Kühlerlüftermotor für ein Kühlerlüftermodul eines Kraftfahrzeugs bereitzustellen.

Erfindungsgemäß wird diese Aufgabe durch einen Elektromotor mit den Merkmalen des Patentanspruchs 1 und ein Kühlerlüftermodul mit den Merkmalen des Patentanspruchs 14 gelöst.

Demgemäß ist ein Elektromotor, insbesondere für ein Kühlerlüftermodul eines Kraftfahrzeugs, vorgesehen, aufweisend: einen Stator, welcher aus geschichteten Metallblechen aufgebaut ist,
einen Motorträger aus einem elektrisch leitfähigen Material, eine Kabelanbindung mit einem Masseleitungskabel, und wenigstens ein Verbindungs- und Kontaktierungselement aus einem elektrisch leitfähigen Material,
wobei das Verbindungs- und Kontaktierungselement derart ausgebildet und an dem Elektromotor angeordnet ist, dass es eine Masseanbindung zwischen dem Stator und dem Motorträger und/oder zwischen dem Stator und dem Masseleitungskabel der Kabelanbindung bereitstellt und wobei der Stator und der Motorträger unabhängig von dem Verbindungs- und Kontaktierungselement aneinander befestigt sind.

Die der Erfindung zugrunde liegende Idee besteht darin, dass die Masseanbindung unabhängig von der Befestigung des Motorträgers an dem Stator erfolgt, in dem der Stator und der Motor und/oder das Masseleitkabel der Kabelanbindung mit dem Stator durch wenigstens ein Verbindungs- und Kontaktierungselement verbunden und elektrisch kontaktiert werden. Gemäß der Erfindung ist der Motorträger, aus einem leitfähigen Material und der Motorträgerträger wird mit dem Stator über das wenigstens eine Verbindungs- und Kontaktierungselement aus einem elektrisch leitfähigen Material verbunden, um den Antrieb elektrisch zu isolieren.

Dies hat den Vorteil, dass eine raumsparende und kostengünstige Masseanbindung bereitgestellt werden kann, bei welcher auf die bisherige Anbindung durch Schrauben verzichtet werden kann und des Weiteren keine großen, komplex geformten Stahlfederklammern bereitgestellt werden müssen, die neben der Massenanbindung eine sichere Befestigung von Gehäuse und Deckel realisieren müssen. Stattdessen wird die Befestigung von Motorträger und Stator von der Masseanbindung entkoppelt und dadurch die Masseanbindung erheblich vereinfacht und eine größere Gestaltungsfreiheit bei der Verbindung von Stator und Motorträger erlaubt, da bei der Befestigung die Masseanbindung nicht integriert werden muss.

Des Weiteren wird ein Kühlerlüftermodul mit einem derartigen Elektromotor bereitgestellt.

Vorteilhafte Ausgestaltungen und Weiterbildungen ergeben sich aus den weiteren Unteransprüchen sowie aus der Beschreibung unter Bezugnahme auf die Figuren der Zeichnung.

In einer erfindungsgemäßen Ausführungsform sind die geschichteten Metallbleche des Stators mit einer Öffnung zum Aufnehmen eines ersten Abschnitts oder ersten Endes des wenigstens einen Verbindungs- und Kontaktierungselements versehen. Der Motorträger ist wiederum mit einer Öffnung zum Aufnehmen eines zweiten Abschnitts oder zweiten Endes des wenigstens einen Verbindungs- und Kontaktierungselements ausgebildet, wobei das wenigstens eine Verbindungs- und Kontaktierungselement derart in der Öffnung des Stators aufgenommen ist, dass es wenigstens ein Metallblech des Stators elektrisch kontaktiert und dass es derart in der Öffnung des Motorträgers aufgenommen ist, dass es den Motorträger elektrisch kontaktiert zum Bereitstellen der Masseanbindung zwischen dem Stator und dem Motorträger. Auf diese Weise kann sehr einfach eine raumsparende und sehr kostengünstige Masseanbindung bereitgestellt werden.

In einer weiteren erfindungsgemäßen Ausführungsform ist das Verbindungs- und Kontaktierungselement ein Federelement aus einem elektrisch leitfähigen Material. Das Verbindungs- und Kontaktierungselement ist dabei beispielsweise eine Spiralfeder, wobei die Spiralfeder z.B. eine zylindrische oder ballige Form aufweisen kann. Solche Federelemente, insbesondere Spiralfedern, sind besonders preiswert und einfach zu montieren.

In einer anderen erfindungsgemäßen Ausführungsform ist der Stator teilweise mit Kunststoff als elektrischer Isolierung umspritzt ist. Geschichtete Metallbleche des Stators können dabei an dem Außenumfang des Stators freigelassen werden und dem entsprechend keine Umspritzung mit Kunststoff als elektrische Isolierung aufweisen. Diese freiliegenden metallbleche am Außenumfang des Stators haben den Vorteil, dass sie zur elektrischen Kontaktierung durch das wenigstens eine Verbindungs- und Kontaktierungselement genutzt werden können zum Herstellen einer Masseanbindung.

Gemäß einer erfindungsgemäßen Ausführungsform ist das Verbindungs- und Kontaktierungselement derart ausgebildet, dass es wenigstens ein oder mehrere Metallbleche an dem Außenumfang der nicht mit Kunststoff umspritzten geschichteten Metallbleche des Stators elektrisch kontaktiert und derart zwischen dem Stator und dem Motorträger angeordnet ist, dass es den Motorträger elektrische kontaktiert zum Bereitstellen der Masseanbindung zwischen dem Stator und dem Motorträger. Somit kann sehr einfach eine Masseanbindung hergestellt werden und insbesondere ein Zugang zu den Metallblechen des Stators, um diese elektrisch zu kontaktieren für die Masseanbindung.

In einer erfindungsgemäßen Ausführungsform ist das Verbindungs- und Kontaktierungselement eine Klammer, insbesondere eine L-förmige Klammer, aus einem elektrisch leitfähigen Material. Ein erstes oder oberes Ende der Klammer kontaktiert elektrisch dabei das wenigstens eine freiliegende nicht mit Kunststoff umspritzte Metallblech des Stators. Ein zweites oder unteres Ende der Klammer ist wiederum derart ausgebildet, dass es den Stator hintergreift und den dem Stator gegenüberliegenden Motorträger dabei elektrisch kontaktiert. Die Klammer hat den Vorteil, dass sie einfach und kostengünstig als Stanz- und Biegeteil hergestellt werden kann, da sie eine sehr einfache Form aufweist.

In einer weiteren erfindungsgemäßen Ausführungsform weist die Klammer an ihrem oberen Ende eine Kontaktfläche auf, mit welcher die Klammer gegen geschichtete freiliegende nicht mit Kunststoff umspritzte Metallbleche des Stators vorgespannt ist in eingebautem Zustand, um wenigstens eines der Metallbleche elektrisch zu kontaktieren. Mit der Kontaktfläche weist die Klammer eine definiert Fläche auf, mit welcher sie die freiliegenden, nicht umspritzten geschichteten Metallbleche des Stators elektrisch kontaktieren kann. Die Klammer hat den Vorteil, dass sie sehr wenig Bauraum benötigt und insbesondere nicht sehr weit über den Außenumfang des Stators ragt, im Gegensatz zu den raumgreifenden Stahlfederklammern des in der Beschreibungseinleitung genannten Standes der Technik.

In einer erfindungsgemäßen Ausführungsform ist das Verbindungs- und Kontaktierungselement an dem Motorträger als Stift aus einem elektrisch leitfähigen Material befestigt und in eine zugeordnete Öffnung in den geschichteten Metallblechen des Stators derart einführbar, dass es wenigstens eines oder mehrere der geschichteten Metallbleche elektrisch kontaktiert zum Bereitstellen der Masseanbindung zwischen dem Stator und dem Motorträger. Auf diese Weise kann ebenfalls eine sehr einfache, kostengünstige, leicht zu montierende und raumsparende Masseanbindung bereitgestellt werden. Der jeweilige Stift kann dabei an Motorträger, beispielsweise angegossen sein, so dass er nicht extra montiert werden muss. Ebenso kann der jeweilige Stift auch als separates Bauteil an dem Motorträger befestigt oder montiert werden.

Gemäß einer erfindungsgemäßen Ausführungsform ist das Verbindungs- und Kontaktierungselement als Verlängerung wenigstens eines der geschichteten Metallbleche des Stators an dem Außenumfang des Stators ausgebildet und aus dem Stator zu dem Motorträger herausgeführt derart, dass es den Motorträger elektrisch kontaktiert zum Bereitstellen der Masseanbindung zwischen dem Stator und dem Motorträger. Dadurch kann auf ein separates Verbindungs- und Kontaktierungselement verzichtet werden und die Montage und Herstellungskosten zusätzlich reduziert werden.

In einer erfindungsgemäßen Ausführungsform weist das wenigstens eine zum Motorträger verlängerte Metallblech an der mit dem Motorträger zu kontaktierenden Seite keine elektrische Isolierung, insbesondere keine elektrisch isolierende Beschichtung, auf, so dass sehr einfach und problemlos eine elektrische Kontaktierung zwischen dem verlängerten und zu dem Außenumfang des Motorträgers umgebogenen wenigstens einen Metallblech und dem Motorträger hergestellt werden kann.

In einer anderen erfindungsgemäßen Ausführungsform weist der Elektromotor ein Stanzgitter auf, wobei das Stanzgitter auf der dem Stator zugewandten Seite mit dem wenigstens einen Verbindungs- und Kontaktierungselement versehen ist, wobei das Verbindungs- und Kontaktierungselement mit dem Masseleitungskabel der Kabelanbindung elektrisch verbunden ist und in einer zugeordneten Öffnung in den geschichteten Metallblechen des Stators derart aufgenommen ist, dass es wenigstens eines der geschichteten Metallbleche elektrisch kontaktiert zum Bereitstellen der Masseanbindung zwischen dem Stator und dem Masseleitungskabel der Kabelanbindung. Auf diese Weise kann ein Massenanbindung auch direkt zwischen der Kabelanbindung und dem Stator bereitgestellt werden, wobei lediglich das Stanzgitter hierfür mit einem zusätzlichen Verbindungs- und Kontaktierungselement versehen werden muss, was einfach und kostengünstig zu realisieren ist.

In einer weiteren erfindungsgemäßen Ausführungsform ist das Verbindungs- und Kontaktierungselement als Kontaktpin aus einem elektrisch leitfähigen Material an dem Stanzgitter ausgebildet und zu dem Stator und seiner Öffnung zum Aufnehmen des Kontaktpins hin ausgebildet oder verlängert und dazu durch das Kabelanbindung und dessen Umhüllung z.B. aus einem Dicht- und/oder elektrisch isolierenden Material herausgeführt.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnungen angegebenen Ausführungsbeispiele näher erläutert. Es zeigen dabei:
- Fig. 1: einen Ausschnitt eines Elektromotors gemäß einer ersten Ausführungsform der Erfindung;
- Fig. 2: eine Perspektivansicht eines erfindungsgemäßen Verbindungs- und Kontaktierungselements zum Einsatz bei dem Elektromotor gemäß Fig. 1;
- Fig. 3: eine weitere Perspektivansicht des Elektromotors gemäß Fig. 1;
- Fig. 4: einen vergrößerten Ausschnitt des Elektromotors gemäß Fig. 3;
- Fig. 5: eine Perspektivansicht eines Elektromotors gemäß einer zweiten Ausführungsform der Erfindung;
- Fig. 6: eine Perspektivansicht eines erfindungsgemäßen Verbindungs- und Kontaktierungselements zum Einsatz bei Elektromotor gemäß Fig. 5;
- Fig. 7: einen vergrößerten Ausschnitt des Elektromotors gemäß Fig. 5;
- Fig. 8: einen weiteren vergrößerten Ausschnitt des Elektromotors gemäß Fig. 5;
- Fig. 9: eine Perspektivansicht eines Elektromotors gemäß einer dritten Ausführungsform der Erfindung;
- Fig. 10: eine Perspektivansicht eines Elektromotors gemäß einer vierten Ausführungsform der Erfindung;
- Fig. 11: einen vergrößerten Ausschnitt des Elektromotors gemäß Fig. 10; und
- Fig. 12: eine Perspektivansicht eines Elektromotors gemäß einer fünften Ausführungsform der Erfindung;

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen.

Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts Anderes ausführt ist - jeweils mit denselben Bezugszeichen versehen.

### BESCHREIBUNG VON AUSFÜHRUNGSBEISPIELEN

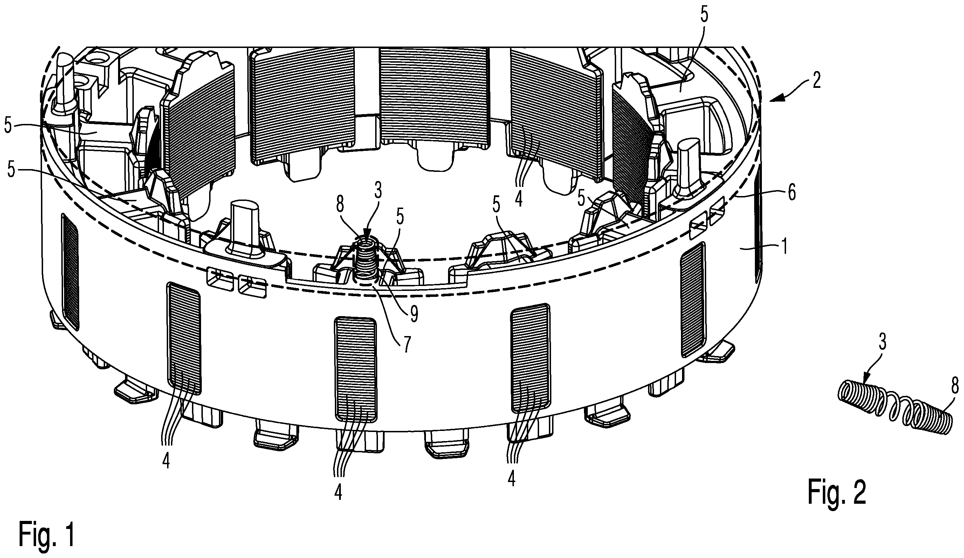

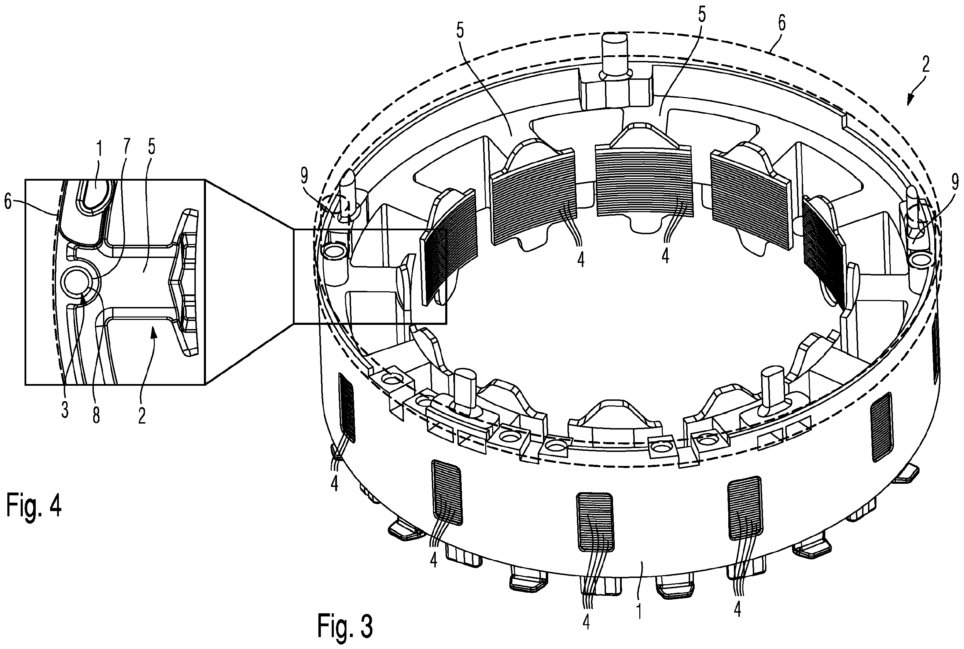

Die Fig. 1 zeigt einen Ausschnitt eines erfindungsgemäßen Elektromotors 2 gemäß einer ersten Ausführungsform der Erfindung. Des Weiteren zeigt Fig. 2 eine Perspektivansicht eines erfindungsgemäßen Verbindungs- und Kontaktierungselements 3 zum Einsatz bei dem Elektromotor 2 gemäß Fig. 1. Des Weiteren zeigt Fig. 3 eine weitere Perspektivansicht des Elektromotors 2 gemäß Fig. 1 und Fig. 4 einen vergrößerten Ausschnitt des Elektromotors 2 gemäß Fig. 3.

Der erfindungsgemäße Elektromotor 2 weist dabei den Stator 1 auf, wie er in Fig. 1, 3 und 4 gezeigt ist. Der Stator 1 weist dabei geschichtete Metallbleche 4 auf, die mit einer jeweiligen elektrischen Isolierung, z.B. elektrischen Isolierschicht, dazwischen 4 versehen sind. Der Stator 1 weist des Weiteren mehrere Statorzähne 5 auf, die mit nicht dargestellten Spulenwicklungen versehen werden, zum Bereitstellen beispielsweise einer mehrphasigen z.B. dreiphasigen Drehfeldwicklung. Die Spulenwicklungen sind dabei in den Fig. 1, 3 und 4 aus Gründen der Übersichtlichkeit nicht dargestellt.

Der aus geschichteten Metallblechen 4 aufgebaute Stator 1 ist in dem Ausführungsbeispiel in den Fig. 1, 3 und 4 teilweise mit Kunststoff umspritzt. Dabei können die geschichteten Metallbleche 4 z.B. im Bereich des jeweiligen Statorzahns 5 freigelassen bleiben und nicht umspritzt sein, wie in dem Ausführungsbeispiel in den Fig. 1, 3 und 4 gezeigt ist.

Weiter weist der Elektromotor 2 einen nicht dargestellten Rotor auf, welcher innerhalb des Stators 1 auf einer Rotorwelle drehbar gelagert ist.

Außerdem weist der Elektromotor 2 einen Motorträger 6 auf, welcher in den Fig. 1, 3 und 4 mit einer gestrichelten Linie angedeutet ist.

Um eine Masseanbindung, hier zwischen Stator 1 und Motorträger 6, zu realisieren wird bei dem Stator 1 des Elektromotors 2 gemäß der ersten Ausführungsform der Erfindung an wenigstens einer Stelle an dem Stator 1 eine Öffnung 7, z.B. Durchgangsöffnung, Schlitz, Spalt oder Vertiefung, vorgesehen, wie in den Fig. 1, 3 und 4 gezeigt ist, in welcher ein erster Abschnitt eines elektrisch leitfähigen Federelements 8, vorzugsweise einer elektrisch leitfähigen Spiralfeder, derart aufnehmbar ist, dass wenigstens ein oder mehrere Metallbleche der geschichteten Metallbleche 4 des Stators 1 kontaktiert werden. Ein zweiter Abschnitt des Federelements 8 ist wiederum in einer zugeordneten Öffnung 9, z.B. Durchgangsöffnung, Schlitz, Spalt oder Vertiefung, in dem Motorträger 6 aufnehmbar und mit diesem in Kontakt bringbar. Der Motorträger 6 ist dabei aus einem elektrisch leitfähigen Material hergestellt, beispielweise aus Aluminium, einer Aluminiumlegierung, Kupfer, einer Kupferlegierung, einem elektrisch leitfähigen Kunststoff und/oder Stahl.

Dadurch wird mittels des Federelements 8 als Verbindungs- und Kontaktierungselement 3 eine Masseanbindung zwischen den geschichteten Metallblechen 4 des Stators 1 und dem Motorträger 6 bereitgestellt, ohne dass wie bisher eine Masseanbindung zwischen dem gewickelten Stator zu dessen Motorträger durch Schrauben erfolgt. Des Weiteren dient das Federelement 8 nicht zu einer zusätzlichen Befestigung von Motorträger 6 und Stator 1 sondern vorzugsweise ausschließlich zur Bereitstellung einer Masseanbindung zwischen Stator 1 und Motorträger 6. Stattdessen sind der Stator und der Motorträger durch eigene Befestigungsmittel, z.B. Schrauben, und/oder Befestigungsverfahren, z.B. Verstemmen, aneinander befestigt. Dies gilt für alle Ausführungsformen der Erfindung.

Dem entsprechend kann das Federelement 8 innerhalb des Stators 1 platzsparend angeordnet werden.

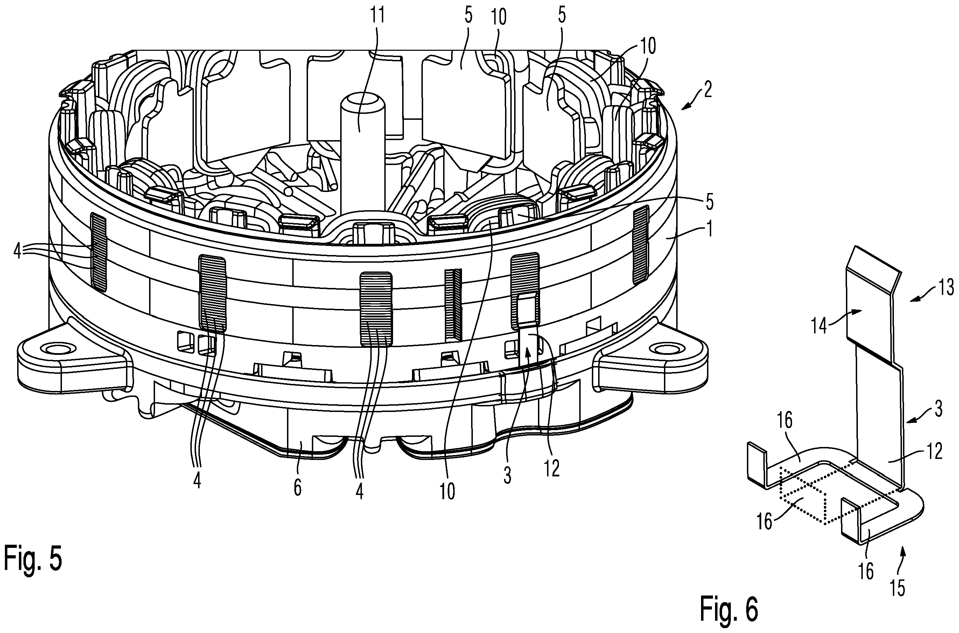

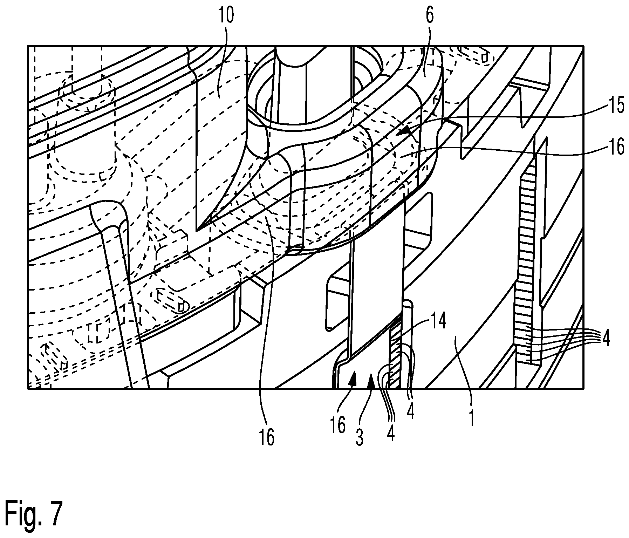

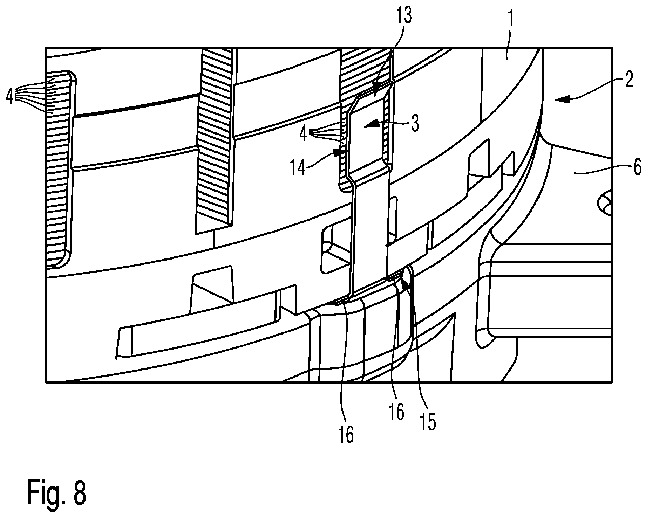

In den Fig. 5-8 ist eine zweite Ausführungsform des erfindungsgemäßen Elektromotors 2 gezeigt. Fig. 5 zeigt dabei einen Ausschnitt eines Stators 1 mit Spulenwicklungen 10, eines Motorträgers 6 und einer Rotorwelle 11 des Elektromotors 2 gemäß der zweiten Ausführungsform der Erfindung in einer Perspektivansicht. Des Weiteren zeigt Fig. 6 eine Perspektivansicht eines erfindungsgemäßen Verbindungs- und Kontaktierungselements 3 zum Einsatz bei dem Stator 1 gemäß Fig. 5. Weiter zeigen die Fig. 7 und 8 jeweils einen vergrößerten Ausschnitt des Elektromotors 2 gemäß Fig. 5.

Die zweite Ausführungsform des Elektromotors 2 weist im Wesentlichen denselben Aufbau auf wie die erste Ausführungsform des Elektromotors, so dass hierzu auf die Beschreibung zu den Fig. 1-4 Bezug genommen wird, um unnötige Wiederholungen zu vermeiden.

Des Weiteren unterscheidet sich die zweite Ausführungsform des Elektromotors 2 von der ersten Ausführungsform des Elektromotors dadurch, dass die Masseanbindung realisiert wird, indem wenigstens eine elektrisch leitfähige Klammer 12 als wenigstens ein Verbindungs- und Kontaktierungselement 3 vorgesehen wird, welche geschichtete Metallbleche 4 des Stators 1 mit dem Motorträger 6 aus einem elektrisch leitfähigen Material verbindet. Es wird ebenfalls eine Masseanbindung zwischen Stator 1 und Motorträger 6 durch das Verbindungs- und Kontaktierungselement 3, hier die Klammer 12, hergestellt.

Wie in Fig. 5, 7 und 8 gezeigt ist, ist der Stator 1, wie zuvor der Stator 1 in den Fig. 1, 3 und 4 aus geschichteten Metallblechen 4 aufgebaut und weist mehrere Statorzähne 5 auf, die mit Spulenwicklungen 10 versehen sind, zum Bereitstellen beispielsweise einer mehrphasigen z.B. dreiphasigen Drehfeldwicklung.

Der aus geschichteten Metallblechen 4 aufgebaute Stator 1 ist ebenfalls teilweise mit Kunststoff umspritzt. Dabei sind die geschichteten Metallbleche 4 am Außenumfang des Stators 1 zumindest in dem Bereich, wo die Metallbleche 4 oder ein Teil der Metallbleche 4 mit dem Verbindungs- und Kontaktierungselement 3 in Kontakt kommt nicht mit Kunststoff umspritzt, sondern liegen frei.

In dem in den Fig. 5, 7 und 8 gezeigten Ausführungsbeispiel sind die geschichteten Metallbleche 4 am Außenumfang des Stators 1 beispielsweise im Bereich des jeweiligen Statorzahns 5 freigelassen und nicht mit Kunststoff umspritzt. Die Erfindung ist jedoch nicht auf diese spezielle Ausgestaltung beschränkt. Der Stator 1 kann an jeder anderen geeigneten Stelle freigelassen und nicht zusätzlich mit Kunststoff umspritzt sein, je nach Funktion und Einsatzzweck.

Wie in den Fig. 5-8 gezeigt ist, wird als Verbindungs- und Kontaktierungselement 3 zum Bereitstellen einer Masseanbindung eine elektrisch leitfähige L-förmige Klammer 12 bereitgestellt. Die L-förmige Klammer 12 weist dabei ein oberes Ende 13 mit einem federnden Abschnitt mit einer Kontaktfläche 14 auf. Der federnde Abschnitt mit seiner Kontaktfläche 14, wird dabei gegen einen Abschnitt der freiliegenden geschichteten Metallbleche 4 am Außenumfang des Stators 1 geklemmt. Mit seiner Kontaktfläche 14 kontaktiert die elektrisch leitfähige L-förmige Klammer 12 mehrere der freiliegenden geschichteten Metallbleche 4 am Außenumfang des Stators 1. Das untere Ende 15 der L-förmigen Klammer 12 ist derart ausgebildet, dass es zwischen den Stator 1 und den Motorträger 6 geklemmt wird und beispielsweise den Stator 1 zusätzlich umgreift oder hintergreift, wie z.B. in Fig. 7 gezeigt ist, während des den Mototorträger 6 dabei kontaktiert.

Dadurch kann die L-förmige Klammer 12 an dem Stator 1 zuverlässig befestigt werden, gleichzeitig dabei den Motorträger 6, sowie freiliegende geschichtete Metallbleche 4 des Stators 1 kontaktieren. Das obere Ende 13 der L-förmigen Klammer 12 kann dabei mit seiner Kontaktfläche 14 gegen freiliegende geschichtete Metallbleche 4 des Stators 1 geklemmt oder vorgespannt werden.

In dem in Fig. 6 gezeigten Ausführungsbeispiel der L-förmigen Klammer 12 aus einem elektrisch leitfähigen Material, ist deren unteres Ende 15 beispielsweise als Gabel mit zwei Stegen 16 ausgebildet, deren Endabschnitte umgebogen sind zum Hintergreifen oder Umgreifen des Stators 1. Das gabelförmige untere Ende 15 hat den Vorteil, dass es eine besonders stabile Auflage für die L-förmige Klammer 12 an dem Stator 1 und dem gegenüberliegenden Motorträger 6 bereitstellt. Die L-förmige Klammer 12 ist jedoch nicht auf die spezielle in Fig. 6 gezeigte Ausgestaltung beschränkt. Insbesondere kann die L-förmige Klammer 12 als unteres Ende 15 auch nur einen Steg 16 mit einem umgebogenen Endabschnitt aufweisen, wie in Fig. 6 mit einer gepunkteten Linie angedeutet ist, oder auch mit der gabelförmigen Ausgestaltung kombiniert werden und z.B. drei Stege mit umgebogenen Endabschnitten aufweisen usw..

Eine solche L-förmige Klammer 12 wie in Fig. 6 angedeutet, kann sehr einfach und kostengünstig als Stanz- und Biegeteil aus einem Metallblech hergestellt werden und ist des Weiteren sehr leicht zu montieren.

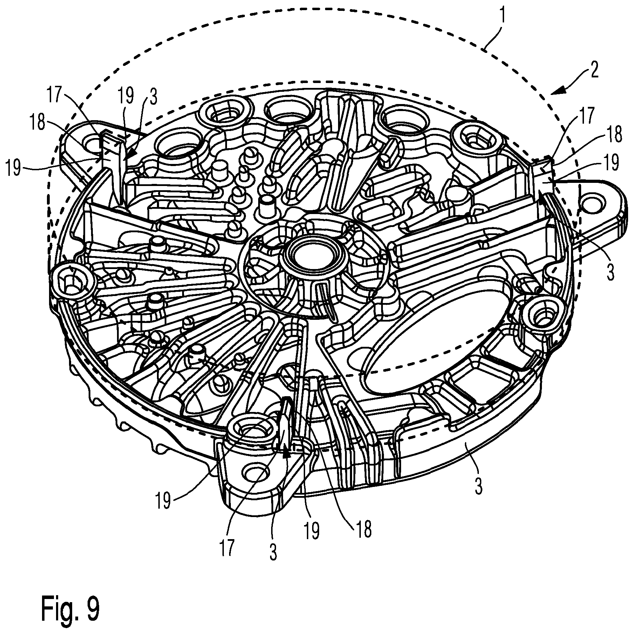

Des Weiteren ist in Fig. 9 eine dritte Ausführungsform eines erfindungsgemäßen Elektromotors 2 gezeigt. Fig. 9 zeigt dabei einen Motorträger 6 des erfindungsgemäßen Elektromotors 2 und einen Stator 1 in einer Perspektivansicht. Der Stator 1 ist dabei in Fig. 9 rein schematisch und stark vereinfacht mit einer gestrichelten Linie angedeutet.

Die dritte Ausführungsform des Elektromotors 2 weist im Wesentlichen denselben Aufbau auf, wie die Elektromotoren der ersten und zweiten Ausführungsform der Erfindung, so dass auf die Beschreibung hierzu in den Fig. 1-8 verwiesen wird, um unnötige Wiederholungen zu vermeiden.

Des Weiteren unterscheidet sich die dritte Ausführungsform des Elektromotors 2 von der ersten Ausführungsform und der zweiten Ausführungsform dadurch, dass der Motorträger 6 ein Verbindungs- und Kontaktierungselement 3 in Form eines Stifts 17 aus einem elektrisch leitfähigen Material aufweist, welches in diesen beispielsweise eingesetzt oder eingebettet ist. Zum Herstellen einer Masseanbindung wird dieser Stift 17 in einer dazu korrespondierenden Öffnung 18, in den geschichteten Metallblechen 4 des Stators 1 derart aufgenommen, dass der Stift 17 geschichtete Metallbleche 4 des Stators 1 kontaktiert.

Die Öffnung 18 in den geschichteten Metallblechen kann z.B. eine Durchgangsöffnung, eine Vertiefung oder ein Schlitz sein, wie er in Fig. 9 gezeigt ist. Der Stift 17 ist dabei in Fig. 9 mit breiten Seitenflächen 19 ausgebildet, welche als Kontaktflächen dienen zum Kontaktieren von geschichteten Metallblechen 4 des Stators 1, wenn der Stift 17 in der zugeordneten Öffnung 18 des Stators 1 aufgenommen ist.

Der in Fig. 9 gezeigte Stift 17 ist beispielsweise als rechteckiger Stift mit einer abgeschrägten Spitze und zwei breiten Seitenflächen 19 ausgebildet. Er kann aber auch jede andere Form aufweisen, die geeignet ist in einer zugeordneten Öffnung 18 in geschichteten Metallblechen 4 des Stators 1 aufgenommen zu werden und geschichtete Metallbleche 4 des Stators 1 zu kontaktieren. Beispielsweise kann der Stift 17 auch zylindrisch ausgebildet sein und z.B. ein flaches Ende oder eine runde Spitze aufweisen usw..

Ein derartiger Stift 17 ist ebenfalls sehr einfach und kostengünstig herzustellen, beispielsweise aus Metall oder einem elektrisch leitfähigen Kunststoff. Der Stift 17 kann an dem Motorträger 6 als separates Bauteil befestigt werden oder einststückig mit dem Motorträger 6 ausgebildet sein. Beispielweise kann der Stift 17 in den Motorträger 6 eingegossen, eingepresst, eingeklemmt, eingeklebt, eingeschraubt und/oder eingeschweißt usw. werden.

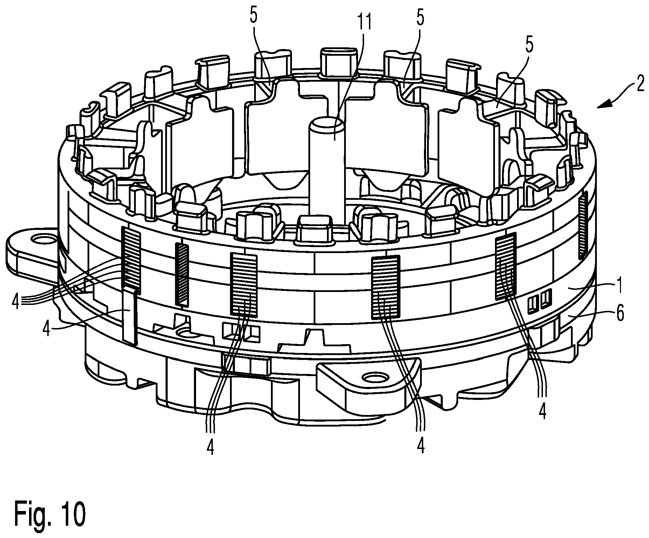

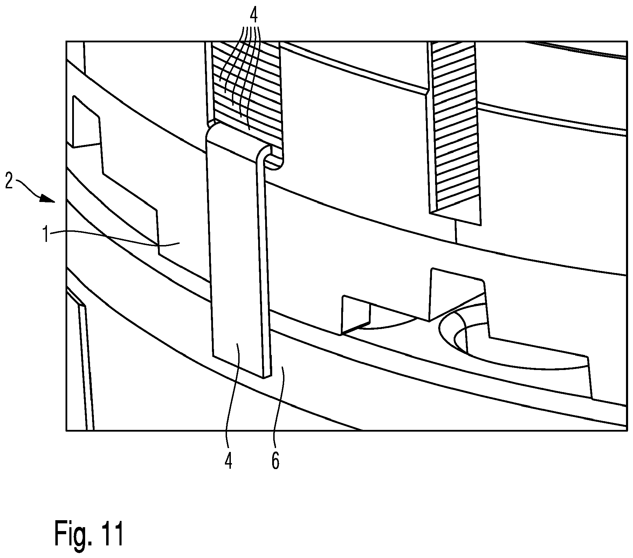

In den Fig. 10 und 11 ist eine vierte Ausführungsform eines erfindungsgemäßen Elektromotors 2 gezeigt. Fig. 10 zeigt dabei einen Ausschnitt eines Stators 1, eines Motorträgers 6 und einer Rotorwelle 11 des Elektromotors 2 gemäß der vierten Ausführungsform der Erfindung in einer Perspektivansicht. Des Weiteren zeigt Fig. 11 einen vergrößerten Ausschnitt des Elektromotors 2 gemäß Fig. 10.

Die vierte Ausführungsform des Elektromotors 2 weist im Wesentlichen denselben Aufbau auf, wie die Elektromotoren der ersten, zweiten und dritten Ausführungsform der Erfindung, so dass auf die Beschreibung hierzu in den Fig. 1-9 verwiesen wird, um unnötige Wiederholungen zu vermeiden.

Des Weiteren unterscheidet sich die vierte Ausführungsform des Elektromotors 2 von der ersten, zweiten und dritten Ausführungsform dadurch, dass eines der geschichteten Metallbleche 4 des Stators 1, welches an dem Außenumfang des Stators 1 freigelassen und nicht mit Kunststoff umspritzt ist, nach außen derart verlängert ist, dass es an einem Abschnitt des Außenumfangs des Motorträgers 6 anliegt und diesen kontaktiert. Das verlängerte Metallblech 4 des Stators 1 weist dabei zumindest in dem Bereich, an welchem es den Motorträger 6 aus einem elektrisch leitfähigen Material kontaktiert, keine elektrische Isolierung, z.B. elektrisch isolierende Beschichtung auf. Ansonsten ist der Stator 1 wie zuvor beschrieben aus den geschichteten Metallblechen 4 aufgebaut, die mit einer jeweiligen elektrischen Isolierung, z.B. elektrischen Isolierschicht, dazwischen 4 versehen sind.

Wie zuvor bereits beschrieben, ist der Motorträger 6 aus einem elektrisch leitfähigen Material. Durch das Kontaktieren des Motorträgers 6 mit dem verlängerten Metallblech 4 des Stators 1 kann somit eine Masseanbindung bereitgestellt werden. Des Weiteren kann verlängerte Metallblech 4 vorzugsweise zusätzlich gegen den Motorträger 6 vorgespannt sein, um den Kontakt zwischen dem Metallblech des Stators und dem Motorträger 6 zusätzlich zu verbessern. Auf diese Weise ergibt sich eine sehr raumsparende und kostengünstige Masseanbindung.

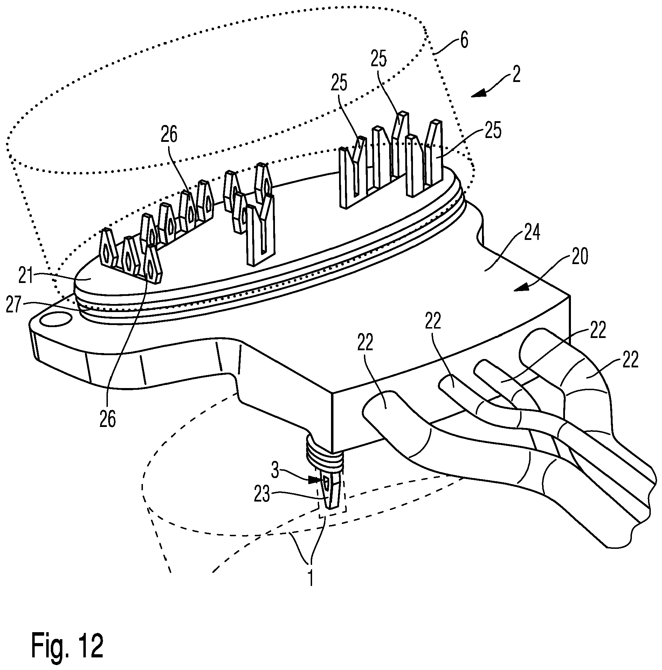

Des Weiteren ist in Fig. 12 eine fünfte Ausführungsform eines erfindungsgemäßen Elektromotors 2 gezeigt. Fig. 12 zeigt dabei eine Perspektivansicht eines Stators 1, eines Motorträgers 6 und einer Kabelanbindung 20 des Elektromotors 2 gemäß der fünften Ausführungsform der Erfindung in einer Perspektivansicht. Der Stator 1 ist dabei in Fig. 12 rein schematisch und stark vereinfacht mit einer gestrichelten Linie und der Motorträger 6 ist ebenfalls rein schematisch und stark vereinfacht mit einer gepunkteten Linie angedeutet.

Die fünfte Ausführungsform des Elektromotors 2 weist im Wesentlichen denselben Aufbau auf, wie die Elektromotoren der ersten, zweiten, dritten und vierten Ausführungsform der Erfindung, so dass auf die Beschreibung hierzu in den Fig. 1-11 verwiesen wird, um unnötige Wiederholungen zu vermeiden.

Des Weiteren unterscheidet sich die fünfte Ausführungsform des Elektromotors 2 von der ersten, zweiten, dritten und vierten Ausführungsform dadurch, dass ein Stanzgitter 21, welches mit der Kabelanbindung 20 verbunden ist und Kabel 22 der Kabelanbindung 20 elektrisch kontaktiert mit einem zusätzlich Verbindungs- und Kontaktierungselement 3 an seiner dem Stator 1 zugewandten Seite ausgebildet ist.

Das Verbindungs- und Kontaktierungselement 3 ist in Form eines Kontaktpins 23 aus einem elektrisch leitfähigen Material ausgebildet, z.B. aus Metall, wie z.B. Kupfer oder einer Kupferlegierung usw., oder einem elektrisch leitfähigen Kunststoff.

Der Kontaktpin 23 ist mit einem Masseleitungskabel der Kabelanbindung 20 elektrisch verbunden und durch die mit einem Dicht- und/oder elektrisches Isolationsmaterial 24 umspritzte Kabelanbindung 20 zum Stator 1 herausgeführt und wird in einer Öffnung der geschichteten Metallbleche 4 des Stators 1 derart eingeführt, dass der Kontaktpin 23 ein oder mehrere der geschichteten Metallbleche 4 kontaktiert und eine Masseanbindung herstellt. Auf diese Weise stellt der Kontaktpin 23 eine Masseanbindung zwischen Kabelanbindung 20 und Stator 1 bereit. Es erfolgt eine Kontaktierung zu der axial offenen Fläche des Stators 1 und seiner geschichteten Metallbleche 4. Als Dicht- und/oder elektrisches Isolationsmaterial 24 kann beispielsweise Kebaflex® verwendet werden.

An dem Stanzgitter 21 sind des Weiteren, wie in Fig. 12 gezeigt ist, auf der dem Motorträger 6 zugewandten Seite beispielsweise mehrere Schneidklemmen 25 sowie sog. Pressfitkontakt 26 vorgesehen zum elektrischen Verbinden mit Bauteilen des Motorträgers 6. Dabei ist außerdem eine Dichtung, z.B eine Silikondichtung oder eine Dichtung aus TPE oder einem Elastomer usw., auf der Außenseite des Stanzgitters 21 gegenüberliegende dem Motorträger 6 vorgesehen. Die Schneidklemmen 25 gehen in Richtung Motorträger 6 und kontaktieren eine Leiterplatte oder PCB, und der Kontaktpin 23 kontaktiert wiederum das Statorpaket.

Die Erfindung ist jedoch auf diese spezielle Ausgestaltung des Stanzgitters mit Schneidklemmen und Pressfitkontakten nicht beschränkt. Es kann jede andere Form von Stanzgitter mit Kontakten vorgesehen werden, das zum Einsatz bei einem Elektromotor geeignet ist und mit wenigstens einem Kontaktpin 23 versehen werden kann.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar. Insbesondere sind die verschiedenen Ausführungsformen des Elektromotors, wie zuvor mit Bezug auf die Fig. 1-12 beschrieben wurden auch miteinander kombinierbar, insbesondere einzelne Merkmale davon. Bei den zuvor beschriebenen Ausführungsformen des erfindungsgemäßen Elektromotors können wenigstens ein oder mehrere Verbindungs- und Kontaktierungselemente vorgesehen werden zum Bereitstellen einer Masseanbindung. Insbesondere können die Verbindungs- und Kontaktierungselemente der fünf Ausführungsformen, wie sie mit Bezug auf die Fig. 1-12 beschrieben wurden auch miteinander kombiniert werden.

Wie bereits ausgeführt erfolgt eine Verbindung von Stator und Motorträger bei zuvor mit Bezug auf die Fig. 1-12 beschriebenen erfindungsgemäßen Elektromotor unabhängig von dem/den Verbindungs- und Kontaktierungselement(en). Das jeweilige Verbindungs- und Kontaktierungselement ist derart ausgebildet, dass es eine Masseanbindung bereitstellen, insbesondere zwischen Stator und Motorträger oder wie in Fig. 12 zwischen Kabelanbindung und Stator.

### Bezugszeichenliste

- 1: Stator
- 2: Elektromotor
- 3: Verbindungs- und Kontaktierungselement
- 4: Metallblech
- 5: Statorzahn
- 6: Motorträger
- 7: Öffnung
- 8: Federelement
- 9: Öffnung
- 10: Spulenwicklung
- 11: Rotorwelle (mit Rotorachse)
- 12: Klammer
- 13: oberes Ende
- 14: Kontaktfläche
- 15: unteres Ende
- 16: Steg
- 17: Stift
- 18: Öffnung
- 19: Seitenfläche
- 20: Kabelanbindung
- 21: Stanzgitter
- 22: Kabel
- 23: Kontaktpin
- 24: Dicht- und/oder elektrisches Isolationsmaterial
- 25: Schneidklemme
- 26: Pressfit

## Patentansprüche

1. Elektromotor (2), insbesondere für ein Kühlerlüftermodul eines Kraftfahrzeugs, aufweisend:
einen Stator (1), welcher aus geschichteten Metallblechen (4) aufgebaut ist,
einen Motorträger (6) aus einem elektrisch leitfähigen Material,
eine Kabelanbindung (20) mit einem Masseleitungskabel (22), und
wenigstens ein Verbindungs- und Kontaktierungselement (3) aus einem elektrisch leitfähigen Material,
wobei das Verbindungs- und Kontaktierungselement (3) derart ausgebildet und an dem Elektromotor (2) angeordnet ist, dass es eine Masseanbindung zwischen dem Stator (1) und dem Motorträger (6) und/oder zwischen dem Stator (1) und dem Masseleitungskabel (22) der Kabelanbindung (20) bereitstellt und wobei der Stator (1) und der Motorträger (6) unabhängig von dem Verbindungs- und Kontaktierungselement (3) aneinander befestigt sind.

2. Elektromotor nach Anspruch 1,
**dadurch gekennzeichnet,**
**dass** die geschichteten Metallbleche (4) des Stators (1) mit einer Öffnung (7) zum Aufnehmen eines ersten Abschnitts des wenigstens einen Verbindungs- und Kontaktierungselements (3) und der Motorträger (6) mit einer Öffnung (9) zum Aufnehmen eines zweiten Abschnitts des wenigstens einen Verbindungs- und Kontaktierungselements (3) ausgebildet sind, wobei das wenigstens eine Verbindungs- und Kontaktierungselement (3) derart in der Öffnung (8) des Stators (1) aufgenommen ist, dass es wenigstens ein Metallblech (4) des Stators (1) elektrisch kontaktiert und dass es derart in der Öffnung (9) des Motorträgers (6) aufgenommen ist, dass es den Motorträger (6) elektrisch kontaktiert zum Bereitstellen der Masseanbindung zwischen dem Stator (1) und dem Motorträger (6).

3. Elektromotor nach Anspruch 1 oder 2,
**dadurch gekennzeichnet,**
**dass** Verbindungs- und Kontaktierungselement (3) ein Federelement (8) aus einem elektrisch leitfähigen Material ist, insbesondere eine Spiralfeder, wobei die Spiralfeder vorzugsweise eine zylindrische oder ballige Form aufweist.

4. Elektromotor nach einem der vorstehenden Ansprüche,
**dadurch gekennzeichnet,**
**dass** der Stator (1) teilweise mit Kunststoff als elektrischer Isolierung umspritzt ist.

5. Elektromotor nach einem der vorhergehenden Ansprüche,
**dadurch gekennzeichnet,**
**dass** geschichtete Metallbleche (4) des Stators (1) an dem Außenumfang des Stators (1) freigelassen sind und keine Umspritzung mit Kunststoff als elektrischer Isolierung aufweisen.

6. Elektromotor nach einem der vorstehenden Ansprüche,
**dadurch gekennzeichnet,**
**dass** das Verbindungs- und Kontaktierungselement (3) derart ausgebildet ist, dass es wenigstens ein Metallblech (4) an dem Außenumfang der nicht mit Kunststoff umspritzten geschichteten Metallbleche (4) des Stators (1) elektrisch kontaktiert und derart zwischen dem Stator (1) und dem Motorträger (6) angeordnet ist, dass es den Motorträger (6) elektrische kontaktiert zum Bereitstellen der Masseanbindung zwischen dem Stator (1) und dem Motorträger (6).

7. Elektromotor nach Anspruch 6,
**dadurch gekennzeichnet,**
**dass** das Verbindungs- und Kontaktierungselement (3) eine Klammer (12), insbesondere eine L-förmige Klammer, aus einem elektrisch leitfähigen Material ist, wobei ein oberes Ende (13) der Klammer (12) das wenigstens eine freiliegende nicht mit Kunststoff umspritzte Metallblech (4) des Stators (1) elektrisch kontaktiert und wobei ein unteres Ende (15) der Klammer (12) derart ausgebildet ist, dass es den Stator (1) hintergreift und dabei den dem Stator (1) gegenüberliegenden Motorträger (6) elektrisch kontaktiert.

8. Elektromotor nach Anspruch 7,
**dadurch gekennzeichnet,**
**dass** die Klammer (12) an ihrem oberen Ende (13) eine Kontaktfläche (14) aufweist, mit welcher die Klammer (12) gegen geschichtete freiliegende nicht mit Kunststoff umspritzte Metallbleche (4) des Stators (1) vorgespannt ist, um wenigstens eines der Metallbleche (4) elektrisch zu kontaktieren.

9. Elektromotor nach einem der vorstehenden Ansprüche,
**dadurch gekennzeichnet,**
**dass** das Verbindungs- und Kontaktierungselement (3) an dem Motorträger (6) als Stift (17) aus einem elektrisch leitfähigen Material befestigt ist und in eine zugeordnete Öffnung (18) in den geschichteten Metallblechen (4) des Stators (1) derart einführbar ist, dass es wenigstens eines der geschichteten Metallbleche (4) elektrisch kontaktiert zum Bereitstellen der Masseanbindung zwischen dem Stator (1) und dem Motorträger (6).

10. Elektromotor nach einem der vorhergehenden Ansprüche,
**dadurch gekennzeichnet,**
**dass** das Verbindungs- und Kontaktierungselement (3) als Verlängerung wenigstens eines der geschichteten Metallbleche (4) des Stators (1) an dem Außenumfang des Stators (1) herausgeführt und zu Außenumfang des Motorträger (6) geführt ist und derart ausgebildet ist, dass es den Motorträger (6) elektrisch kontaktiert zum Bereitstellen der Masseanbindung zwischen dem Stator (1) und dem Motorträger (6).

11. Elektromotor nach Anspruch 10,
**dadurch gekennzeichnet,**
**dass** das wenigstens eine zum Motorträger (6) verlängerte Metallblech (4) an der mit dem Motorträger (6) zu kontaktierenden Seite keine elektrische Isolierung, insbesondere keine elektrisch isolierende Beschichtung, aufweist.

12. Elektromotor nach einem der vorhergehenden Ansprüche,
**dadurch gekennzeichnet,**
**dass** der Elektromotor (2) ein Stanzgitter (21) aufweist, wobei das Stanzgitter (21) auf der dem Stator (1) zugewandten Seite mit dem wenigstens einen Verbindungs- und Kontaktierungselement (3) versehen ist, wobei das Verbindungs- und Kontaktierungselement (3) mit dem Masseleitungskabel (22) der Kabelanbindung (20) verbunden ist und in einer zugeordneten Öffnung in den geschichteten Metallblechen (4) des Stators (1) derart aufgenommen ist, dass es wenigstens eines der geschichteten Metallbleche (4) elektrisch kontaktiert zum Bereitstellen der Masseanbindung zwischen dem Stator (1) und dem Masseleitungskabel (22) der Kabelanbindung (20).

13. Elektromotor nach einem der vorhergehenden Ansprüche,
**dadurch gekennzeichnet,**
**dass** das Verbindungs- und Kontaktierungselement (3) als Kontaktpin (23) aus einem elektrisch leitfähigen Material an dem Stanzgitter (21) ausgebildet und zu dem Stator (1) und seiner Öffnung zum Aufnehmen des Kontaktpins (23) hin ausgebildet oder verlängert ist.

14. Kühlerlüftermodul mit einem Elektromotor (2) nach einem der vorhergehenden Ansprüche, wobei der Elektromotor ein Lüfterrad des Kühlerlüftermoduls antreibt.
